# EUROPÄISCHE PATENTSCHRIFT

(11) **EP 4 255 698 B1**
(45) Veröffentlichungstag und Bekanntmachung des Hinweises auf die Patenterteilung: **20.11.2024**
(21) Anmeldenummer: 21835164.1
(22) Anmeldetag: 29.11.2021
(51) Int. Cl.: B25J 11/00, B25J 5/00, B25J 19/00, A61G 5/04, A61G 7/08

(54) **KOPPLUNGSVORRICHTUNG, SYSTEM MIT EINEM AUTONOMEN FAHRZEUG UND EINER PATIENTENTRANSPORTVORRICHTUNG, SOWIE VERFAHREN ZUM BETREIBEN EINES SOLCHEN SYSTEMS**
COUPLING DEVICE, SYSTEM COMPRISING AN AUTONOMOUS VEHICLE AND A PATIENT TRANSPORT DEVICE, AND METHOD FOR OPERATING SUCH A SYSTEM
DISPOSITIF D'ACCOUPLEMENT, SYSTÈME COMPRENANT UN VÉHICULE AUTONOME ET UN DISPOSITIF DE TRANSPORT DE PATIENT, ET PROCÉDÉ POUR FAIRE FONCTIONNER UN TEL SYSTÈME

(30) Priorität: 02.12.2020 DE 102020215206
(43) Veröffentlichungstag der Anmeldung: 11.10.2023
(73) Patentinhaber: KUKA Deutschland GmbH, 86165 Augsburg (DE)
(72) Erfinder: ZUMPE, Veronika, 86167 Augsburg (DE)
(74) Vertreter: Oelke, Jochen
(86) Internationale Anmeldenummer: PCT/EP2021/083312
(87) Internationale Veröffentlichungsnummer: WO 2022/117488

(56) Entgegenhaltungen:
- EP-B1- 3 283 308
- WO-A2-2016/192857
- US-A1- 2012 029 697

## Beschreibung

Die Erfindung betrifft eine Kopplungsvorrichtung zum Ankoppeln eines autonomen Fahrzeugs an eine Patiententransportvorrichtung. Die Erfindung betrifft außerdem ein zugehöriges System und ein Verfahren zum Betreiben eines solchen Systems. Mittels der Kopplungsvorrichtung können nicht nur Module wie Rollstühle, Rollatoren oder Patientenbetten angekoppelt werden, sondern das System ermöglicht auch einen geführten Personentransport, bei dem sich eine eigenständig gehende Person an der Patiententransportvorrichtung festhalten kann.

Die WO 2016/192857 A2 beschreibt ein Robotersystem zum Transportieren eines verfahrbaren Gegenstands, insbesondere eines Krankenhausbettes, wobei das Robotersystem mindestens zwei Roboter umfasst und beide Roboter jeweils an den verfahrbaren Gegenstand, insbesondere an eine Koppeleinrichtung des verfahrbaren Gegenstands, derart koppelbar sind, dass eine Kraft von mindestens einem der Roboter auf den verfahrbaren Gegenstand übertragbar ist, so dass die Roboter gemeinsam den verfahrbaren Gegenstand transportieren können.

Die US 2012029697 A1 offenbart eine robotische Transportvorrichtung mit einem Transportkörper und zwei Docking-Armen. Ferner ist ein Controller vorgesehen, durch den die Transportvorrichtung autonom bewegbar ist und sich einer Zielvorrichtung nähern kann, dessen Typ bestimmen und die zwei Docking-Arme entsprechend des Typs der Vorrichtung anpassen kann. Darüber hinaus weist die Transportvorrichtung Räder-Stopper auf, welche ebenfalls entsprechend des Typs der Vorrichtung eingestellt werden können. Eine entsprechend mit der Transportvorrichtung gekoppelte Zielvorrichtung kann dann autonom bewegt werden.

Die EP 3283308 B1 zeigt ein robotisches Wagenzug-Vehikel, welches an einen Wagen, insbesondere Wäschewagen in einem Krankenhaus, andockbar ist und diesen ziehen kann. Hierfür weist das Vehikel einen Greifer zum Halten des Wagens auf. Ferner ist ein Positionierungssystem vorgesehen und ein oder mehrere Sensoren, um unnötige Kollisionen mit der Umgebung zu vermeiden.

Aufgabe der Erfindung ist es, eine Kopplungsvorrichtung zu schaffen, mit deren Hilfe eine Vielzahl an unterschiedlichen Patiententransportvorrichtungen auf einfache Weise wahlweise an dasselbe autonome Fahrzeug angekoppelt werden können. Die Aufgabe wird auch gelöst durch ein entsprechendes System, aufweisend eine Patiententransportvorrichtung, ein autonomes Fahrzeug und eine das autonome Fahrzeug an die Patiententransportvorrichtung koppelnde Kopplungsvorrichtung, und entsprechendes Verfahren zum Betreiben des Systems.

Die Aufgabe wird gelöst durch eine Kopplungsvorrichtung zum Ankoppeln eines autonomen Fahrzeugs an eine Patiententransportvorrichtung, aufweisend:
- ein Anschlussglied, das ausgebildet ist zur Befestigung der Kopplungsvorrichtung an einem autonomen Fahrzeug,
- einen ersten Lenker mit einem proximalen Endabschnitt und einem gegenüberliegenden distalen Endabschnitt, wobei der proximale Endabschnitt des Lenkers mittels eines Drehgelenks der Kopplungsvorrichtung an dem Anschlussglied drehbar gelagert ist, und
- eine abgewinkelte Kopplungsstange mit einem proximalen Schenkel und einem gegenüber der Längserstreckung des proximalen Schenkels abgewinkelt angeordneten distalen Schenkel, wobei der proximale Schenkel der Kopplungsstange mittels eines Schwenkgelenks der Kopplungsvorrichtung an dem distalen Endabschnitt des Lenkers schwenkbar gelagert ist und der distale Schenkel der Kopplungsstange einen Anschlussabschnitt bildet, zum Ankoppeln der Kopplungsvorrichtung an eine Patiententransportvorrichtung.

Die Kopplungsvorrichtung bildet ein weitgehend universelles Verbindungsmittel, um ein mobiles Fahrzeug wahlweise mit einer Vielzahl von unterschiedlichen Patiententransportvorrichtungen verbinden zu können, so dass das mobile Fahrzeug die jeweils momentan angekoppelte Patiententransportvorrichtung automatisch von einem ersten Ort zu einem zweiten Ort bewegen bzw. fahren kann.

Im Rahmen der Erfindung werden auch Rollatoren, die eine Geh-Hilfe darstellen, bei denen die geführte Person selbsttätig geht, sich aber am Rollator abstützt als Patiententransportvorrichtungen verstanden. Im gleichen Sinne wird im Rahmen der Erfindung auch das autonome Fahrzeug selbst als eine Patiententransportvorrichtung verstanden, wenn die Kopplungsvorrichtung mit einem Handgriff verbunden ist oder die Kopplungsvorrichtung unmittelbar den Handgriff aufweist oder bildet, und eine selbsttätig gehende Person sich an dem Handgriff festhält und dadurch geführt und/oder gestützt wird. Insofern kann auch der Handgriff als die Patiententransportvorrichtung gelten. Als Patienten werden im Rahmen der Erfindung nicht nur kranke Personen verstanden, die sich in einem Krankenhaus befinden, sondern auch andere Personen, die sich beispielsweise in einer Rehabilitationsklinik, in einem Pflegeheim, an einem Alterswohnsitz oder zuhause befinden und einer entsprechenden Unterstützung bedürfen oder diese wünschen.

Das autonome Fahrzeug kann ein Fahrwerk umfassen, so wie am Fahrwerk drehbar gelagerte Räder, von denen wenigstens ein Rad automatisch angetrieben ist. Das eine Rad oder die mehreren Räder können von einer Fahrsteuerung angesteuert werden. Mittels der Fahrsteuerung, die Teil des autonomen Fahrzeugs sein kann, wird das autonome Fahrzeug automatisch bewegt und insbesondere von einem ersten Ort zu einem zweiten Ort automatisch navigiert. Dazu kann die Fahrsteuerung mit einer Navigationssteuerung verbunden sein. Die Navigationssteuerung kann sich im autonomen Fahrzeug befinden oder sie kann separat ausgebildeter Teil eines vom autonomen Fahrzeug getrennten Navigationssystems sein. Im letzteren Fall ist die Fahrsteuerung steuerungstechnisch, insbesondere drahtlos mit dem Navigationssystem verbunden.

Die Patiententransportvorrichtung kann beispielsweise ein Krankenbett, ein Rollstuhl oder ein Rollator sein.

Im weiteren Sinne kann die Patiententransportvorrichtung aber auch lediglich ein Handgriff oder eine Haltestange sein, an der sich eine Person festhalten kann, um die Gefahr eines Stutzes zu reduzieren, wobei der Handgriff oder die Haltestange mittels dem autonomen Fahrzeug automatisch bewegt, d.h. verfahren wird, um die Person, welche sich an dem Handgriff oder der Haltestange festhält, automatisch von einem ersten Ort an einen zweiten Ort zu führen.

Ergänzend kann ein autonomes Fahrzeug, welches die erfindungsgemäße Kopplungsvorrichtung aufweist, auch dazu genutzt werden, andere Transportvorrichtungen zu bewegen bzw. zu fahren. Einerseits kann in einem solchen Fall die Kopplungsvorrichtung in eine Verwahrungsposition gebracht werden, so dass sie ungenutzt bleibt, aber das autonome Fahrzeug beispielsweise ein Transportregal aufnehmen und es tragend fortbewegen kann. Andererseits kann die erfindungsgemäße Kopplungsvorrichtung alternativ auch genutzt werden, um das autonome Fahrzeug an das Transportregal anzukoppeln, so dass das autonome Fahrzeug das Transportregal in Art eines Anhängers ziehen kann. In diesem Fall müsste das Transportregal eigene Räder zum Fahren des Transportregals aufweisen, was im medizinischen Bereich, wie beispielsweise in Krankenhäusern regelmäßig der Fall ist.

Das Anschlussglied, das ausgebildet ist zur Befestigung der Kopplungsvorrichtung an einem autonomen Fahrzeug, kann eingerichtet sein, die Kopplungsvorrichtung dauerhaft an dem autonomen Fahrzeug zu befestigen. Dann bildet das autonome Fahrzeug zusammen mit der Kopplungsvorrichtung eine Fahreinheit zum Anhängen einer Patiententransportvorrichtung. Das Anschlussglied kann aber auch manuell lösbar gestaltet sein, so dass die Kopplungsvorrichtung bei Bedarf von dem autonomen Fahrzeug getrennt bzw. wieder daran befestigt werden kann.

Der erste Lenker ermöglicht ein Verstellen der Position des Schwenkgelenks relativ zum autonomen Fahrzeug, wenn die Kopplungsvorrichtung an dem autonomen Fahrzeug angeordnet ist. Diese Ausbildung ermöglicht es dem autonomen Fahrzeug außerdem, sich unter der Kopplungsvorrichtung um eine eigene vertikale Achse drehen zu können, ohne dass sich der Lenker und die Kopplungsstange mitdrehen.

Der erste Lenker kann im einfachsten Fall von einer geraden Verbindungsstange gebildet werden. Gegebenenfalls kann der erste Lenker jedoch auch eine andere Gestalt aufweisen. Beispielsweise kann der erste Lenker eine gebogene Form aufweisen, oder einen Knickbereich oder mehrere Knickbereiche aufweisen. Der proximale Endabschnitt und der distale Endabschnitt definieren die beiden gegenüberliegenden Endabschnitte des jeweilig gestalteten Lenkers, unabhängig davon, wie der Lenker, bzw. ein Mittenabschnitt des Lenkers ausgebildet ist.

Mit seinem proximalen Endabschnitt ist der Lenker über das Drehgelenk an dem Anschlussglied der Kopplungsvorrichtung drehbar gelagert. Als proximaler Endabschnitt wird derjenige Endabschnitt des Lenkers definiert, welcher in der kinematischen Kette von Drehgelenk und Schwenkgelenk sich näher an dem Anschlussglied bzw. im System sich näher an dem autonomen Fahrzeug befindet und sich weiter weg von dem Anschlussabschnitt der Kopplungsstange bzw. im System sich weiter weg von der Transportvorrichtung befindet. Als distaler Endabschnitt wird derjenige Endabschnitt des Lenkers definiert, welcher in der kinematischen Kette von Drehgelenk und Schwenkgelenk sich weiter weg von dem Anschlussglied bzw. im System sich weiter weg von dem autonomen Fahrzeug befindet und sich näher an dem Anschlussabschnitt der Kopplungsstange bzw. im System sich näher an der Transportvorrichtung befindet.

Die abgewinkelte Kopplungsstange kann stumpfwinkelig oder spitzwinkelig ausgebildet sein. Im Speziellen kann die abgewinkelte Kopplungsstange rechtwinkelig ausgebildet sein, so dass der proximale Schenkel und der distale Schenkel zumindest in ihren Verbindungsbereichen zumindest annähernd in einem 90-Grad-Winkel aneinanderstoßen. Der proximale Schenkel und der distale Schenkel können jeweils von geraden Stangenabschnitten oder Rohrabschnitten gebildet werden. Alternativ können der proximale Schenkel und/oder der distale Schenkel jeweils von gebogenen, geschwungenen oder gekröpften Stangenabschnitten oder Rohrabschnitten gebildet werden.

Als proximaler Schenkel wird derjenige Schenkel der Kopplungsstange definiert, welcher in der kinematischen Kette von Drehgelenk und Schwenkgelenk sich näher an dem Anschlussglied bzw. im System sich näher an dem autonomen Fahrzeug befindet und sich weiter weg von dem Anschlussabschnitt der Kopplungsstange bzw. im System sich weiter weg von der Transportvorrichtung befindet. Als distaler Schenkel wird derjenige Schenkel der Kopplungsstange definiert, welcher in der kinematischen Kette von Drehgelenk und Schwenkgelenk sich weiter weg von dem Anschlussglied bzw. im System sich weiter weg von dem autonomen Fahrzeug befindet und sich näher an dem Anschlussabschnitt der Kopplungsstange bzw. im System sich näher an der Transportvorrichtung befindet.

Das Schwenkgelenk kann einen maximalen Schwenkwinkel aufweisen, der kleiner ist als 360 Grad, insbesondere kleiner ist als 180 Grad. Alternativ kann das Schwenkgelenk aber auch ausgebildet sein für Drehungen um mehr als 360 Grad bzw. zum freien Drehen. Insoweit kann auch das Schwenkgelenk als ein Drehgelenk ausgebildet sein.

Das Drehgelenk kann ausgebildet sein für Drehungen um mehr als 360 Grad bzw. zum freien Drehen. Das Drehgelenk kann aber auch alternativ ausgebildet sein mit einem maximalen Drehwinkel, der kleiner ist als 360 Grad, insbesondere kleiner ist als 180 Grad. Insoweit kann auch das Drehgelenk als ein Schwenkgelenk ausgebildet sein.

Die Kopplungsvorrichtung weist wenigstens das Drehgelenk und das Schwenkgelenk auf. In weiterführenden Ausgestaltungen kann die Kopplungsvorrichtung gegebenenfalls neben dem einem Drehgelenk und dem einen Schwenkgelenk noch ein weiteres Gelenk oder mehrere weitere Gelenke aufweisen.

Der Anschlussabschnitt zum Ankoppeln der Kopplungsvorrichtung an eine Patiententransportvorrichtung kann bereits durch einen einfachen Stangenabschnitt oder Rohrabschnitt des distalen Schenkels gebildet werden. In einer solchen Ausführung kann der distale Schenkel der Kopplungsstange hinter einem Strukturelement der Transportvorrichtung eingehakt werden, beispielsweise hinter einem Fahrwerksrahmenteil eines Krankenbettes, eines Rollstuhles oder eines Rollators. Alternativ oder ergänzend kann der Anschlussabschnitt mechanische Verbindungsmittel aufweisen, mit denen die Kopplungsvorrichtung an der jeweiligen Transportvorrichtung befestigt werden kann. Die Verbindungsmittel können beispielsweise Klemmbacken, Greiferfinger, Haken oder ähnliche formschlüssige und/oder kraftschlüssige Verbindungsmittel sein.

Das Drehgelenk, mittels dem der proximale Endabschnitt des Lenkers an dem Anschlussglied der Kopplungsvorrichtung drehbar gelagert ist, kann eine Drehachse aufweisen, welche in einer an das autonome Fahrzeug angekoppelten Anordnung der Kopplungsvorrichtung vertikal ausgerichtet ist, und das Schwenkgelenk, mittels dem der proximale Schenkel der Kopplungsstange an dem distalen Endabschnitt des Lenkers schwenkbar gelagert ist, kann dabei eine Schwenkachse aufweisen, welche in einer an das autonome Fahrzeug angekoppelten Anordnung der Kopplungsvorrichtung zumindest im Wesentlichen horizontal ausgerichtet ist.

Indem die Drehachse des Drehgelenks vertikal ausgerichtet ist, kann die gesamte Kopplungsvorrichtung relativ zum autonomen Fahrzeug in verschiedene Himmelsrichtungen geschwenkt werden. Indem die Schwenkachse des Schwenkgelenks horizontal ausgerichtet ist, kann der Anschlussabschnitt der Kopplungsvorrichtung, insbesondere ein Griffabschnitt der Kopplungsvorrichtung in seiner jeweiligen Höhenlage verstellt d.h. angepasst werden.

Das Drehgelenk kann somit eine Drehachse aufweisen, welche in einer an das autonome Fahrzeug angekoppelten Anordnung der Kopplungsvorrichtung in allen Fahrstellungen des autonomen Fahrzeugs auf einer horizontalen Fahrebene vertikal ausgerichtet ist, und das Schwenkgelenk kann dabei eine Schwenkachse aufweisen, welche in einer an das autonome Fahrzeug angekoppelten Anordnung der Kopplungsvorrichtung in all den möglichen Drehlagen des Drehgelenks und in allen Fahrstellungen des autonomen Fahrzeugs auf einer horizontalen Fahrebene stets horizontal ausgerichtet ist.

Das Drehgelenk und/oder das Schwenkgelenk können arretierbar, in einer nicht-arretierten Weise frei drehbar, aus einer Drehbewegung bremsbar und/oder automatisch antreibbar ausgebildet sein.

Für eine arretierbare Ausbildung des Drehgelenks und/oder des Schwenkgelenks kann das jeweilige Gelenk eine Rastvorrichtung aufweisen, welche ausgebildet ist, das betreffende Gelenk in mehreren verschiedenen Gelenkwinkelstellungen, die insoweit Raststufen des Gelenks bilden, einrastend zu arretieren. Die Rastvorrichtung kann dazu beispielsweise zwei klauenkupplungsartige Rastkörper aufweisen, welche aufeinander zuweisende Stirnseiten aufweisen, die formergänzende Rastprofile aufweisen. Ein erster Rastkörper und ein zweiter Rastkörper der Rastvorrichtung können dazu mit ihren Stirnseiten aufeinander zuweisend mittels einer Federeinrichtung gegeneinander vorgespannt sein. Abhängig von der Geometrie der Formpartner und der Federvorspannung das Gelenk auch als Sicherheitskupplung genutzt werden.

Für eine bremsbare Ausbildung des Drehgelenks und/oder des Schwenkgelenks kann das jeweilige Gelenk eine Bremse aufweisen. Die jeweilige Bremse kann manuell zu betätigen sein oder automatisch aktivierbar und deaktivierbar ausgebildet sein. Im Fall einer automatisch aktivierbaren und deaktivierbaren Bremse kann diese beispielsweise eine elektromechanische Bremse sein.

Für eine automatisch antreibbare Ausbildung des Drehgelenks und/oder des Schwenkgelenks kann das jeweilige Gelenk einen Motor, insbesondere einen elektrischen Motor aufweisen. Der elektrische Motor und/oder gegebenenfalls andere elektrische Komponenten der Kopplungsvorrichtung können über das autonome Fahrzeug mit elektrischer Energie versorgt werden. Die zur Versorgung mit elektrischer Energie erforderlichen elektrischen Kabel oder elektrischen Leitungen können insbesondere im Inneren der Kopplungsvorrichtung, beispielsweise in einem hohlen Rohr der Kopplungsvorrichtung verlegt und/oder geführt sein. Dazu kann die Kopplungsvorrichtung einen elektrischen Steckverbinder aufweisen, welcher mit einem elektrischen Gegensteckverbinder des autonomen Fahrzeugs zusammenwirkt, so dass elektrische Energie von dem autonomen Fahrzeug auf die Kopplungsvorrichtung übertragen werden kann, wenn die Kopplungsvorrichtung an dem autonomen Fahrzeug angebracht ist.

Das Drehgelenk und/oder das Schwenkgelenk können automatisch arretierbar und/oder manuell arretierbar ausgebildet sein.

Das Drehgelenk kann ausgebildet sein, den proximalen Endabschnitt des Lenkers an dem Anschlussglied der Kopplungsvorrichtung über wenigstens 360 Grad drehbar zu lagern.

Das Schwenkgelenk kann ausgebildet sein, den proximalen Schenkel der Kopplungsstange an dem distalen Endabschnitt des Lenkers in einer vorbestimmten Anzahl von unterschiedlichen Schwenkstellungen arretierbar schwenkbar zu lagern. Der proximale Schenkel der Kopplungsstange kann mittels des Schwenkgelenks auch kontinuierlich verstellbar, d.h. stufenlos verstellbar und somit in beliebigen Stellungen arretierbar sein. In einer Leerfahrt-Stellung des autonomen Fahrzeugs kann die Kopplungsstange in einer Parkposition bzw. in einer Nische des autonomen Fahrzeugs, insbesondere zumindest teilweise oder vollständig verborgen, sich in einer Verwahrungsstellung befinden.

Der distale Schenkel der abgewinkelten Kopplungsstange kann ausgebildet sein, sowohl einen Anschlussabschnitt, als auch einen Handgriffabschnitt zu bilden.

Als ein Anschlussabschnitt kann dieser Verbindungsmittel aufweisen, beispielsweise Klemmbacken, Greiferfinger, Haken oder ähnliche formschlüssige und/oder kraftschlüssige Verbindungsmittel, um die Kopplungsvorrichtung mit der jeweiligen Patiententransportvorrichtung verbinden zu können.

Das Drehgelenk kann eine erste Überlastsicherung aufweisen, die ausgebildet ist, das arretierte, das gebremste oder das angetriebene Drehgelenk drehmomentfrei zu schalten, wenn das übertragene Drehmoment ein vorbestimmtes Maximalmoment überschreitet und/oder das Schwenkgelenk kann eine zweite Überlastsicherung aufweisen, die ausgebildet ist, das arretierte, das gebremste oder das angetriebene Schwenkgelenk drehmomentfrei zu schalten, wenn das übertragene Drehmoment ein vorbestimmtes Maximalmoment überschreitet.

Die Aufgabe wird demgemäß auch gelöst durch ein System zum automatischen Bewegen einer Patiententransportvorrichtung mittels eines autonomen Fahrzeugs, aufweisend eine Patiententransportvorrichtung, ein autonomes Fahrzeug und eine das autonome Fahrzeug an die Patiententransportvorrichtung koppelnde Kopplungsvorrichtung, nach einer Ausführungsform oder nach mehreren Ausführungsformen, wie beschrieben.

Die Aufgabe wird auch gelöst durch ein Verfahren zum Betreiben eines Systems zum automatischen Bewegen einer Patiententransportvorrichtung mittels eines autonomen Fahrzeugs, aufweisend eine Patiententransportvorrichtung, ein autonomes Fahrzeug und eine das autonome Fahrzeug an die Patiententransportvorrichtung koppelnde Kopplungsvorrichtung, nach einer Ausführungsform oder nach mehreren Ausführungsformen, wie beschrieben, aufweisend die Schritte:
- automatisches Drehen des autonomen Fahrzeugs aus seiner Ausgangsstellung durch angesteuertes Antreiben von Rädern des autonomen Fahrzeugs derart, dass das autonome Fahrzeug sich auf einer Fahrebene um eine vertikale Drehachse dreht, die durch das autonome Fahrzeug verläuft, bis das autonome Fahrzeug eine Stellung einnimmt, in der es tangential zu einem um die Patiententransportvorrichtung umlaufenden geschlossenen Ringpfad fahrbar ist,
- automatisches Fahren des autonomen Fahrzeugs entlang des Ringpfades, der die Patiententransportvorrichtung geschlossen umlaufend umgibt, derart, dass eine Wendeachse oder Drehachse, um welche sich die Patiententransportvorrichtung dreht, wenn sich das autonome Fahrzeug entlang des Ringpfades bewegt, durch die Patiententransportvorrichtung verläuft, bis die Patiententransportvorrichtung gewendet oder gedreht ist,
- erneutes automatisches Drehen des autonomen Fahrzeugs durch angesteuertes Antreiben von Rädern des autonomen Fahrzeugs derart, dass das autonome Fahrzeug sich auf der Fahrebene um eine vertikale Drehachse dreht, die durch das autonome Fahrzeug verläuft, bis das autonome Fahrzeug eine Stellung einnimmt, in der es mit seiner Hauptfahrrichtung um eine zu seiner Ausgangsstellung um einen Winkel gedrehten oder um 180 Grad gewendeten Stellung ausgerichtet ist.

Das Verfahren zum Betreiben eines Systems zum automatischen Bewegen einer Patiententransportvorrichtung mittels eines autonomen Fahrzeugs, kann eine Patiententransportvorrichtung, ein autonomes Fahrzeug und eine das autonome Fahrzeug an die Patiententransportvorrichtung koppelnde Kopplungsvorrichtung, nach einer Ausführungsform oder nach mehreren Ausführungsformen wie beschrieben aufweisen, wobei der distale Schenkel der Kopplungsstange einen Anschlussabschnitt bildet, zum Ankoppeln der Kopplungsvorrichtung an eine Patiententransportvorrichtung, wobei der Anschlussabschnitt derart ausgebildet ist, dass er mit seiner Längserstreckung einem Pfad, insbesondere Bogen oder einem Kreisbogen folgt, aufweisend den Schritt:
- automatisches Drehen des autonomen Fahrzeugs durch angesteuertes Antreiben von Rädern des autonomen Fahrzeugs derart, dass das autonome Fahrzeug sich auf einer Fahrebene um eine vertikale Drehachse dreht, und zwar um eine vertikale Drehachse welche durch den von dem Pfad, insbesondere Bogen oder Kreisbogen der Längserstreckung des Anschlussabschnitts der Kopplungsvorrichtung bestimmten Bogenmittelpunkt in der Ankopplungsstellung der Kopplungsvorrichtung verläuft.

Die Erfindung ist im Folgenden zusammenfassend dargestellt und mitunter anders ausgedrückt nochmals in anderen Worten dargestellt. Die Erfindung stellt ein Konzept für eine Multimobilitätserweiterung von Patienten im Krankenhaus oder in Pflegeeinrichtungen durch die Automatisierung des Patiententransportes bereits, mit dem Zweck die Pflegekräfte zu entlasten, sodass sie mehr Zeit für die tatsächlichen pflegerischen Tätigkeiten zur Verfügung haben. Ein Vorteil dabei kann sein, dass ohne Modifizierung der zu transportierenden Patiententransportvorrichtungen, die nötigen Szenarien des Personentransportes umgesetzt werden können, inklusive des geführten Personentransportes, unabhängig von der Art beispielsweise des Rollators oder Rollstuhls. Durch eine geschickte Ausprägung der erfindungsgemäßen Kopplungsvorrichtung in Kombination mit einer mobilen Plattform, d.h. einem autonomen Fahrzeug, kann ein Gesamtsystem erstellt werden, welches die Szenarien ohne Umrüsten oder Anpassen erfüllen kann. Die nachfolgend beschriebene technische Lösung ist aufgebaut aus einer einfachen Kinematik, der Kopplungsvorrichtung, die in Kombination mit sinnvoller Ausnutzung der Flexibilität der mobilen Plattform auf geschickte Weise mit den Systemen koppeln kann und eine hohe Beweglichkeit für das Gesamtsystem bietet. Dies kann essentiell sein, da der zur Verfügung stehende Platz in den Pflegeeinrichtungen oder in Krankenhäusern begrenzt ist und Eigenschaften wie beispielsweise ein möglichst kleiner Wendekreis daher eine wichtige Rolle spielen.

Zusammenfassend wird durch die vorgestellte Erfindung der Personentransport in den Szenarien des geführten Personentransports, einem Laufen des Patienten am Rollator, einem Sitzen des Patienten im Rollstuhl und einem Transport des Patienten, der sich liegend im Bett befindet, automatisiert.

Dies wird ohne Modifizierung der zu bewegenden Module auf einfache Art und Weise mit einem einzigen System gelöst. Dadurch wird eine kostengünstige, effiziente Lösung für den Personentransport aufgezeigt und die Pflegekräfte entlastet, sodass mehr Zeit für die wesentlichen Aufgaben bleibt.

Hauptbestandteil der Erfindung ist ein Koppelsystem, das für Patiententransport in verschiedenen Modi genutzt werden kann und für den Menschen ein Multimobilitätsmodul bietet. In Kombination mit einer differentiell angetriebenen mobilen Plattform und einer geschickten Anordnung des Koppelsystems zu der Plattform besitzt das Gesamtsystem eine hohe Flexibilität trotz einfacher Kinematik des eigentlichen Koppelmoduls. Ein weiterer Vorteil besteht darin, dass das System mit den verschiedenen Modulen koppelbar ist und somit flexibel kombiniert werden kann, sodass nur eine minimale Anzahl dieser Geräte benötigt wird, um die Mobilität und Flexibilität eine Vielzahl an Modulen mit dem Patienten zu ermöglichen.

Nachfolgend wird auf die Hauptbestandteile und deren Ausprägung eingegangen. Fokus der Erfindung liegt in der Kopplungsvorrichtung, d.h. dem Koppelmodul, weshalb dessen Bestandteile genauer erläutert werden.

Als mobile Plattform kann eine beliebige mobile Plattform mit differentiellem Antrieb genutzt werden, deren Spezifikationen den Anforderungen des Anwendungsfalls gerecht werden. Um ein schlüssiges Gesamtkonzept zu ermöglichen, kann es sinnvoll sein, dass die mobile Plattform beispielsweise mit Laserscannern und Kameras für die Sicherheit und Navigation ausgestattet ist, sowie weiter optional über einen Hubmechanismus verfügen kann, dessen Bewegung beispielsweise zum Anheben von Objekten oder Modulen oder als Antriebsorgan für einen Koppelmechanismus zwischen Koppelmodul und zu transportierendem Objekt herangezogen werden kann. Die mobile Plattform verfügt über die entsprechenden Spezifikationen für die Lasten, die zu handhaben sind und weist beispielsweise zwei Laserscanner und einen Hubmechanismus auf. Vorteil der hier vorgeschlagenen Konzepte liegen allerdings auch darin, dass durch den modularen Aufbau auch eine beliebige Plattform, welche die Anforderungen erfüllt, genutzt werden kann.

Wie zuvor beschrieben besteht das Koppelmodul aus drei Hauptbestandteilen, welche jeweils eine oder mehrere Funktionen realisieren und im Zusammenspiel ein einfaches Koppelmodul mit einer Vielzahl an Funktionen und eine große Flexibilität bereitstellen, was für das Multimobilitätsmodul unabdingbar ist und die verschiedenen Transportmodi sinnvoll ermöglicht. Das Koppelmodul an sich ist einfach aufgebaut und nutzt die Freiheitsgrade der mobilen Plattform, um Funktionen zu realisieren, wodurch das System einen einfachen Aufbau aufweist, jedoch verschiedene Funktionen realisieren kann.

Eine Deichselaufhängung kann das erste Gelenk der kinematischen Kette des Koppelmoduls ergänzen und dadurch gekennzeichnet, dass die Rotationsachse in einem 90°-Winkel die Achsen der Antriebsräder der mobilen Plattform schneidet. Die bekannten Fahrsysteme haben in der Regel einen großen Wendekreis. Die hier vorgestellte Anordnung der Achsen zueinander löst dieses technische Problem sinnvoll, indem der Wendekreis auf die minimal möglichen Abmessungen reduziert wird, in dem das zu ziehende Modul beim Wenden auf der Stelle gedreht werden kann. Ein minimaler Radius ergibt den Kollisionsradius des zu ziehenden Moduls beim Drehen auf der Stelle, addiert zu der Länge des Koppelmoduls und des Kollisionsradius beim Drehen auf der Stelle der mobilen Plattform.

Eine 180° Wendung des Gesamtsystems auf engstem Raum erfolgt beispielsweise in drei hintereinander auszuführenden Einzelbewegungen. Zuerst dreht die mobile Plattform auf der Stelle um 90°, was durch den differentiellen Antrieb in Kombination mit dem Drehgelenk des Koppelmoduls möglich ist. Anschließend wird die mobile Plattform so angetrieben, dass es um das zu ziehende Modul herumfährt. Dies erfolgt so, dass der Drehpunkt des zu transportierenden Moduls genau in der Mitte der eigenen beiden Haupträder auf der Radachse liegt. Nachdem die mobile Plattform einen Halbkreis um das zu transportierende Module gefahren ist und dieses dadurch eine 180°-Drehung auf der Stelle durchgeführt hat, dreht die mobile Plattform auf der Stelle wieder um 90°, sodass die Hauptfahrrichtung nun 180° gedreht ist gegenüber der Plattformorientierung vor dem Wendemanöver und das Gesamtsystem die Fahr fortsetzen kann.

Zusammenfassend ermöglichen das Gelenk und die geschickte Anordnung der Achse zur Antriebsachse der mobilen Plattform das Wenden des Gesamtsystems mit minimalem Platzbedarf.

Weiterhin kann in dem Gelenk eine Bremse oder eine Verriegelung integriert sein, so dass die Relativbewegung zwischen mobiler Plattform und dem Koppelmodul gesperrt werden kann. Dies ist für eine Variante des Koppelns sinnvoll und wird nachfolgend näher beschrieben.

Die Verriegelung des Gelenks kann automatisch oder manuell erfolgen. Für die Anwendung der Verriegelung für die Ausführung der Kopplungsmöglichkeit muss es lediglich möglich sein, das Gelenk in seiner Nullstellung verriegeln zu können. Dies kann neben einer Halte- oder Feststellbremse auch einfacher realisiert werden, beispielsweise mit einfachen Verriegelungsmechanismen oder Verriegelungspartnern, da keine großen Lasten in diesem Zustand übertragen werden müssen. Dies kann über eine kraftschlüssige und/oder formschlüssige Verbindung erfolgen.

Möglichkeiten dazu sind beispielsweise eine Stiftverbindung, bei der ein Gelenkpartner einen Stift oder ein stiftähnliches Element aufweist, vorzugsweise konisch zulaufend, um geringe Abweichungen in der Gelenkausrichtung zu kompensieren und ein Verklemmen der Verbindung zu verhindern. Der andere Gelenkpartner weist den entsprechenden Gegenpart auf, beispielsweise eine Sacklochbohrung oder eine konisch zulaufende Bohrung. Anstatt Stift und Bohrung sind auch weitere Geometrien denkbar und sinnvoll, wie beispielsweise eine Verzahnung, eine Paarung von Kegel und Kugel oder eine Keilverbindung. Gelöst und wieder verriegelt werden kann die Verbindung entweder manuell mit der Hand oder automatisch. Für die automatische Auslösung kann der in der Plattform vorhandene Hubmechanismus genutzt werden. Dazu kann lediglich einer der Verbindungspartner an dem Fahrzeugrahmen und der andere Partner am Hubrahmen befestigt sein. Durch die Hubbewegung werden die Elemente zusammengefügt und dadurch verriegelt. So ist das Gelenk an sich betrachtet passiv, kann aber die Funktion des Hubes ausnutzen, um das Gelenk autonom zu sperren. Weite Möglichkeiten zur automatischen Betätigung sind z.B. Aktor-Elemente, kleine Linearantriebe oder Hubmagnete.

Neben der Funktion, das Gelenk zu sperren, können bei Verwendung von Formelementen diese auch für eine Sicherheitsfunktion genutzt werden. Soll beispielsweise eine Koppelvorgang erfolgen und unerwarteter Weise eine Störkontur den Koppelvorgang verhindern, so wird die Verriegelung der Gelenkpartner automatisch bei Überlast gelöst. Dieser Grenzwert kann durch die Form der Gelenkpartner und die Normalkraft, die zum Koppeln aufgebracht wird, eingestellt werden. Erfolgt die Verriegelung manuell, kann die Vorspannkraft mittels Federelement eingestellt werden und durch Wahl der Federelemente die aufzubringende Kraft zum Lösen der Entkopplung gezielt eingestellt werden.

Das zweite Gelenk der kinematischen Kette ist das Schwenkgelenk. Es kann drei oder eine beliebige Anzahl an wählbaren Hauptstellungen aufweisen. Diese vorzugsweise drei oder vier Stellungen ermöglichen auf sinnvolle Art und Weise die verschiedenen Szenarien (des Personen- und Modultransportes. Zwischenstellungen sind nicht notwendig, weshalb das Gelenk als tristabiles Gelenk ausgeführt sein kann. Dadurch werden eine einfache Aktorik und Ansteuerung des Gelenks ermöglicht.

Die vorzugsweise drei Stellungen des Gelenks können kraft- und/oder formschlüssig realisiert werden und das Umstellen von einem Modus in den anderen kann manuell oder automatisch erfolgen.

Ein manuelles Verstellen kann beispielsweise durch Lösen einer formschlüssigen Verbindung und/oder einer Vorspannung erfolgen. Nachdem das Glied des Koppelmoduls in die gewünschte Stellung verfahren wurde, kann die Verbindung wiederhergestellt werden und das System ist für das gewünschte Szenario einsatzbereit. Die Vorspannung kann beispielweise über ein Federelement erfolgen. Durch die Kombination einer Vorspannung und passender Formelemente der Gelenkpartner wird sichergestellt, dass immer eine der vorzugsweise drei Gelenkpositionen eingenommen wird, auch wenn die Stellung nicht exakt getroffen wurde. So sind geringe Abweichungen kompensierbar und das Umstellen kann schnell und manuell erfolgen.

Eine weitere Möglichkeit ist ein Gelenk mit integriertem Gewinde, in das eine Schraube montiert werden kann. Wird die Schraube gelöst, kann das eine Glied relativ zum anderen Glied in die gewünschte Stellung bewegt werden. Durch Festziehen der Schraubverbindung werden die Teile wieder zusammengepresst und eine kraftschlüssige Verbindung hergestellt.

Um die Modi automatisch zu wechseln, gibt es neben der Integration eines Motors, je nach Art des Motors in Kombination mit Getriebe, mit Bremse noch weitere Möglichkeiten, die Modi automatisch zu wechseln. Beispielsweise kann ein Draht aus einer Formgedächtnislegierung als Aktor verwendet werden. Mit einer Federvorspannung kann das eine Glied in der Mittelstellung gehalten werden. Soll nun der Modus gewechselt werden, wird je nachdem, in welche Richtung das Glied bewegt werden soll, eines von zwei gegeneinander wirkenden Formgedächtnis-Elemente bestromt, wodurch es materialbedingt aufgrund der Jouleschen Wärme kontrahiert und das Strukturteil entsprechend entgegen der Federvorspannung aus der Mittelstellung oder aus der neutralen Stellung auslenkt. Damit der Modus beibehalten wird, aber der Aktor nicht fortlaufend bestromt werden muss, können Formelementpartner vorgesehen werden, die dafür sorgen, dass das Gelenk an der gewünschten Stelle einrastet.

Auf dem Strukturteil des Koppelbereichs des Koppelmoduls befinden sich die Funktionsflächen zum Koppeln mit den zu ziehenden Modulen, sowie die haptische Schnittstelle für die Patienten beim geführten Patiententransport. Der Koppelbereich ist dadurch gekennzeichnet, dass er mit den verschiedenen Modellen der Module wie Rollstuhl oder Rollator ohne Umrüsten koppeln kann. Eine mögliche Ausprägungsform ist eine gerade Stange, optional mit einem Schubelement, welches automatisch oder manuell an den Koppelpunkt des zu koppelnden Modules geschoben werden kann. Die eigentliche Verbindung zu der Tragstruktur des zu koppelnden Modules kann kraftschlüssig und/oder formschlüssig erfolgen. Dies kann über eine Schraubverbindung, Klemmverbindung oder Verriegelung erfolgen. Eine Geschickte Ausprägungsform des Koppelbereiches weist Koppelformelemente oder einen einfachen Mechanismus auf, welche sich mit der Tragstruktur der zu transportierenden Module verbinden können. Diese Koppelformelemente lassen sich öffnen und schließen. Diese Bewegungen können durch den Hub der mobilen Plattform ausgelöst werden, indem beispielsweise ein Seil oder ein Draht an dem Fahrzeugrahmen befestigt ist, und von dort aus am Hubrahmen und dem Koppelmodul entlang bis zu den Koppelformelementen geführt wird. Die Koppelformelemente können gelenkig gelagert und mit dem Seil oder dem Drahtelement verbunden sein. Wird nun der Hub der Plattform ausgelöst, schließen oder öffnen sich die Koppelformelemente aufgrund der Relativbewegung zwischen Hubrahmen und Fahrzeugrahmen der Plattform. So werden die Freiheitsgrade der mobilen Plattform sinnvoll genutzt und weitere Funktionen neben dem einfachen Anheben von Gütern gewährleistet.

Eine weitere Möglichkeit der Ausprägungsform des Koppelbereiches ist eine gebogene Form. Diese Ausprägungsform weist zwei wesentliche Vorteile auf. In Kombination mit der Möglichkeit, das Gelenk zu sperren, kann die Bewegung der Plattform als Bewegung zum Koppeln genutzt werden. Dazu fährt die Plattform inklusive dem Koppelmodul vor das zu koppelnde Modul, verriegelt das Gelenk und dreht sich auf der Stelle oder entsprechend einer geeigneten Koppelbewegung. Dadurch bewegen sich Koppelmodul und die Plattform gemeinsam, relativ zu dem zu koppelnden Modul. Der Koppelbereich wird an der geeigneten Stelle des Moduls platziert und kann sich mit dem Strukturteil vom Modul verbinden. Danach wird das Gelenk freigegeben und der Transport kann durchgeführt werden. Der zweite Vorteil in der abgerundeten Geometrie des Koppelbereiches liegt in der Erhöhung der Ergonomie für den Patienten beim geführten Gehen. Der Koppelbereich kann so ausgeprägt sein, dass die haptische Verbindung für den Anwender ergonomisch ist und eine höhere Stabilität bietet, da durch die leicht gedrehten Handgelenke die Kraft vom Patienten besser auf das Koppelmodul übertragen werden kann und der Patient dadurch weniger angestrengt ist.

Ein signifikanter Vorteil der geschickten Platzierung des Koppelbereiches in Bezug auf das zu koppelnde Modul liegt darin, dass die Geometrien der unterschiedlichen Rollstuhl- und Rollator-Modell stark variieren, allerdings in dem gewählten Koppelbereich in der Regel ähnlich aufgebaut und leicht zugänglich sind, weshalb diese besondere Anordnung vorteilhaft ist.

Ein weiterer Vorteil des Koppelmoduls liegt in der geschickten geometrischen Form. Anstelle der Standardform einer Deichsel wird die hier vorgestellte Geometrie umgesetzt. Dadurch ist der Kraftfluss von Plattform zu dem zu koppelnden Modul zwar einfach und nicht über zwei Träger geführt, dafür wird allerdings eine gute Zugänglichkeit zu dem Patienten geboten, dieser hat genügend Beinfreiheit für einen komfortablen Transport und es ist außerdem möglich, ohne Kollision mit dem Koppelelement z.B. aus dem Rollstuhl aufzustehen.

Es kann vorgesehen werden, dass die einzelnen Bereiche des Koppelmoduls in der Länge verstellbar sind, sodass sie ideal für den jeweiligen Modus manuell oder automatisch angepasst werden können. Alternativ kann aber auch eine Konfiguration ermittelt werden, welche alle Modi sinnvoll ermöglicht und das Koppelmodul dadurch einen einfacheren und robusteren Aufbau aufweist. Dazu müssen die Längen so aufeinander abgestimmt sein, dass alle Stellungen für die entsprechenden Modi mit der Koppelkinematik mit konstanten Gliedlängen ohne Kollision erreicht werden können. Die Längen müssen so gewählt werden, dass sich die Plattform um den eigenen Mittelpunkt drehen kann, ohne mit dem zu transportierenden Modul oder der Person zu kollidieren. Außerdem muss die Länge so ausgelegt sein, dass für den Modus eine ergonomische Höhe für den Patienten zum Festhalten gewährleistet ist.

Damit überprüft werden kann, ob und wie der Patient sich im Gesamtsystem verhält und beispielsweise die Vorschubgeschwindigkeit und optional auch die Richtung, in die sich das System bewegt, eingestellt werden kann, können an verschiedenen Stellen des Koppelmoduls Sensorelemente integriert werden. Sie können in der Lagerung der Deichsel, in der Befestigungselement für Rollator und/oder Rollstuhl oder in einem Element des Koppelmoduls integriert werden. Entscheidend ist, dass in jedem Modus die Kraft zwischen zu transportierendem Modul, der geführten Person oder dem Bett detektiert werden kann. Als Sensorelement können kostengünstige Kraftsensoren, Dehnungsmessstreifen oder Wägezellen verwendet werden.

Mit dem vorgestellten Koppelmodul ist es möglich, eine Vielzahl an unterschiedlichen Rollstühlen, Rollatoren und optional sogar Betten oder Trolleys koppeln und transportieren zu können. Außerdem verfügt das Koppelmodul über eine haptische Schnittstelle, sodass diese als Griff des Gesamtsystems betrachtet werden kann und als Stütze für den geführten Personentransport dienen kann.

Um zu überwachen, ob und wie der Patient und/oder das Modul dem System folgen, kann ein Patientenüberwachungsmodul auf der Plattform vorgesehen werden. Dadurch können auch Gesten und Körperhaltung der Patienten überwacht und ggfs. für eine erfolgreiche weitere Behandlung analysiert und ausgewertet werden.

Optional können neben dem Patiententransport auch Hol- und Bringdienste mit dem System ermöglicht werden. In diesem Fall koppelt das System beispielsweise an einen Trolley an und kann diesen autonom transportieren. Die Kopplung kann entweder durch den Hubmechanismus der Plattform oder mittels Bewegung der Plattform und dem verriegelten Gelenk erfolgen.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung auf Konzeptebene einer beispielhaften Ausführungsform einer erfindungsgemäßen Kopplungsvorrichtung zum Ankoppeln eines autonomen Fahrzeugs an eine Patiententransportvorrichtung,
- Fig. 2: eine perspektivische Darstellung der Kopplungsvorrichtung gemäß Fig. 1 in ihrer Anbaulage an einem beispielhaften autonomen Fahrzeug,

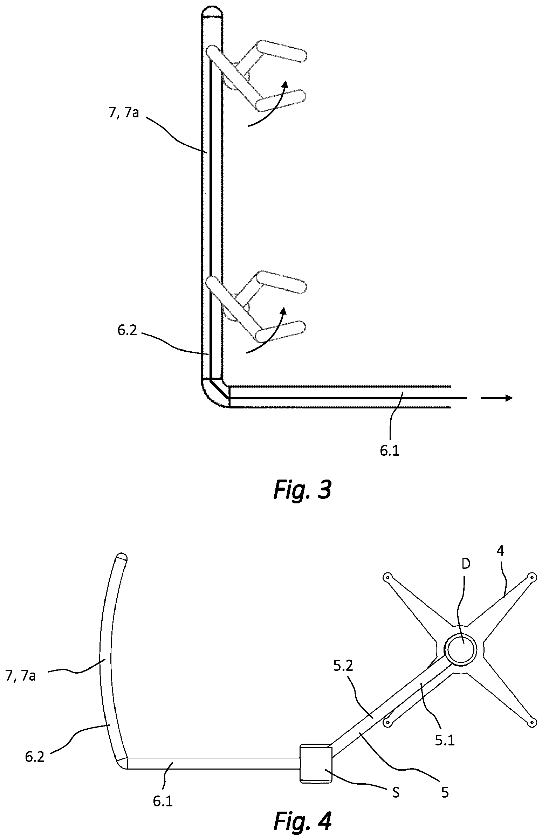

- Fig. 3: eine Teilansicht eines distalen Schenkels einer abgewinkelten Kopplungsstange der Kopplungsvorrichtung gemäß Fig. 1,
- Fig. 4: eine Draufsicht auf die Kopplungsvorrichtung gemäß Fig. 1 in einer Alleinstellung,
- Fig. 5: eine erste Ausführungsvariante eines Systems, aufweisend ein autonomes Fahrzeug, eine Kopplungsvorrichtung, die das autonome Fahrzeug an eine Patiententransportvorrichtung koppelt, sowie die Patiententransportvorrichtung, die als ein Krankenbett ausgebildet ist,
- Fig. 6: eine zweite Ausführungsvariante eines Systems, aufweisend ein autonomes Fahrzeug, eine Kopplungsvorrichtung, die das autonome Fahrzeug an eine Patiententransportvorrichtung koppelt, sowie die Patiententransportvorrichtung, die als ein Rollstuhl ausgebildet ist,
- Fig. 7: eine dritte Ausführungsvariante eines Systems, aufweisend ein autonomes Fahrzeug, eine Kopplungsvorrichtung, die das autonome Fahrzeug an eine Patiententransportvorrichtung koppelt, sowie die Patiententransportvorrichtung, die als ein Rollator ausgebildet ist,
- Fig. 8: eine vierte Ausführungsvariante eines Systems, aufweisend ein autonomes Fahrzeug, eine Kopplungsvorrichtung, die an dem autonome Fahrzeug befestigt ist, wobei die Kopplungsvorrichtung einen Handgriffabschnitt bildet, der von einer gehenden Person gegriffen werden kann,
- Fig. 9: eine fünfte Ausführungsvariante eines Systems, aufweisend ein autonomes Fahrzeug, eine Kopplungsvorrichtung, die an dem autonome Fahrzeug befestigt und in eine verborgene Stellung gebracht ist, derart, dass das autonome Fahrzeug ein Krankenhaus-Transportregal aufnehmen und transportieren kann,
- Fig. 10: eine schematische Darstellung, eines beispielshaften Verfahrens zum Ankoppeln des autonomen Fahrzeugs an eine Patiententransportvorrichtung,
- Fig. 11: eine schematische Darstellung, eines beispielshaften Verfahrens zum Wenden des Systemgespanns, bestehend aus dem autonomen Fahrzeug, der Kopplungsvorrichtung und einer Patiententransportvorrichtung, und
- Fig. 12: perspektivische Darstellungen einer Kupplung, welche das Schwenkgelenk der Kopplungsvorrichtung ausbildet zum Arretieren in vorbestimmten Schenkstellungen.

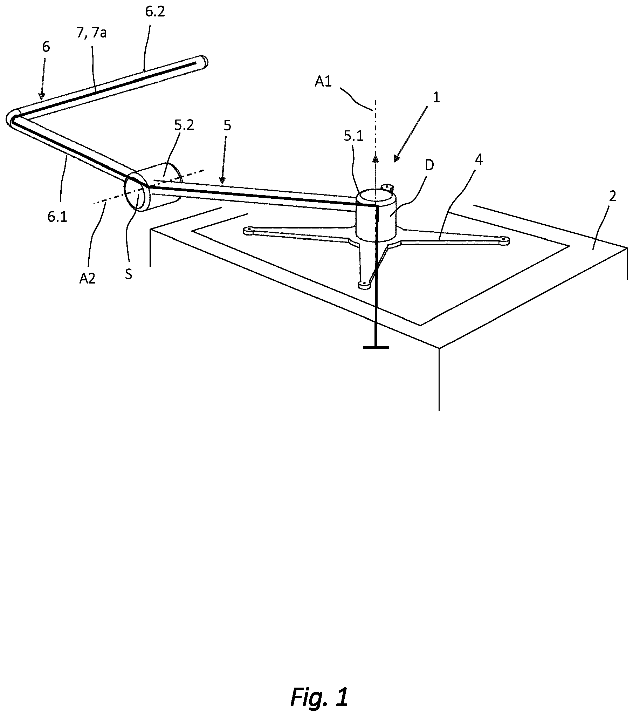

In der Fig. 1 ist eine Kopplungsvorrichtung 1 zum Ankoppeln eines autonomen Fahrzeugs 2 an eine Patiententransportvorrichtung 3 dargestellt. Die Kopplungsvorrichtung 1 weist ein Anschlussglied 4 auf, das ausgebildet ist zur Befestigung der Kopplungsvorrichtung 1 an dem autonomen Fahrzeug 2. Die Kopplungsvorrichtung 1 umfasst einen ersten Lenker 5 mit einem proximalen Endabschnitt 5.1 und einem gegenüberliegenden distalen Endabschnitt 5.2, wobei der proximale Endabschnitt 5.1 des Lenkers 5 mittels eines Drehgelenks D der Kopplungsvorrichtung 1 an dem Anschlussglied 4 drehbar gelagert ist. Die Kopplungsvorrichtung 1 umfasst außerdem eine abgewinkelte Kopplungsstange 6 mit einem proximalen Schenkel 6.1 und einem gegenüber der Längserstreckung des proximalen Schenkels 6.1 abgewinkelt angeordneten distalen Schenkel 6.2, wobei der proximale Schenkel 6.1 der Kopplungsstange 6 mittels eines Schwenkgelenks S der Kopplungsvorrichtung 1 an dem distalen Endabschnitt 5.2 des Lenkers 5 schwenkbar gelagert ist und der distale Schenkel 6.2 der Kopplungsstange 6 einen Anschlussabschnitt 7 bildet, zum Ankoppeln der Kopplungsvorrichtung 1 an die Patiententransportvorrichtung 3.

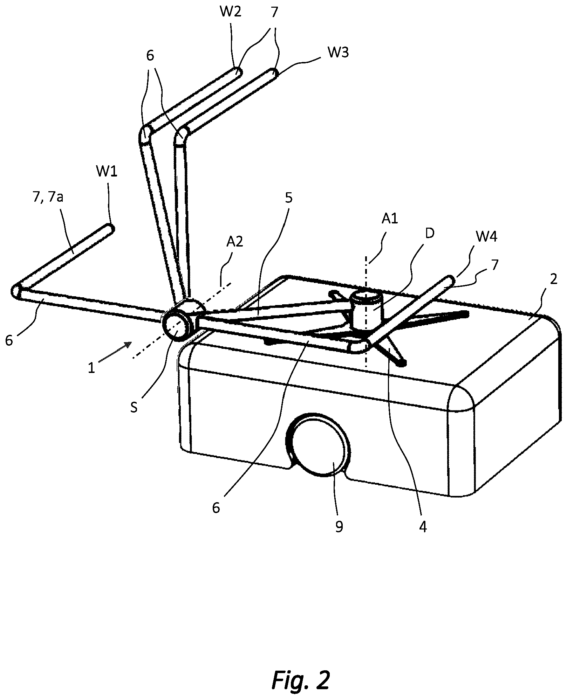

Das Drehgelenk D, mittels dem der proximale Endabschnitt 5.1 des Lenkers 5 an dem Anschlussglied 4 der Kopplungsvorrichtung 1 drehbar gelagert ist, weist im Falle des vorliegenden Ausführungsbeispiels eine Drehachse A1 auf, welche in einer an das autonome Fahrzeug 2 angekoppelten Anordnung der Kopplungsvorrichtung 1, wie beispielsweise in Fig. 2 veranschaulicht, vertikal ausgerichtet ist, und das Schwenkgelenk S, mittels dem der proximale Schenkel 6.1 der Kopplungsstange 6 an dem distalen Endabschnitt 5.1 des Lenkers 5 schwenkbar gelagert ist, eine Schwenkachse A2 aufweist, welche in einer an das autonome Fahrzeug 2 angekoppelten Anordnung der Kopplungsvorrichtung 1 horizontal ausgerichtet ist.
das Drehgelenk D und/oder das Schwenkgelenk S können arretierbar, in einer nicht-arretierten Weise frei drehbar, aus einer Drehbewegung bremsbar und/oder automatisch antreibbar ausgebildet sein.

Im Falle des vorliegenden Ausführungsbeispiels ist das Drehgelenk D ausgebildet, den proximalen Endabschnitt 5.1 des Lenkers 5 an dem Anschlussglied 4 der Kopplungsvorrichtung 1 über wenigstens 360 Grad drehbar zu lagern.

Im Falle des vorliegenden Ausführungsbeispiels ist das Schwenkgelenk S ausgebildet, den proximalen Schenkel 6.1 der Kopplungsstange 6 an dem distalen Endabschnitt 5.2 des Lenkers 5 in einer vorbestimmten Anzahl von unterschiedlichen Schwenkstellungen W1 bis W4 arretierbar schwenkbar zu lagern.

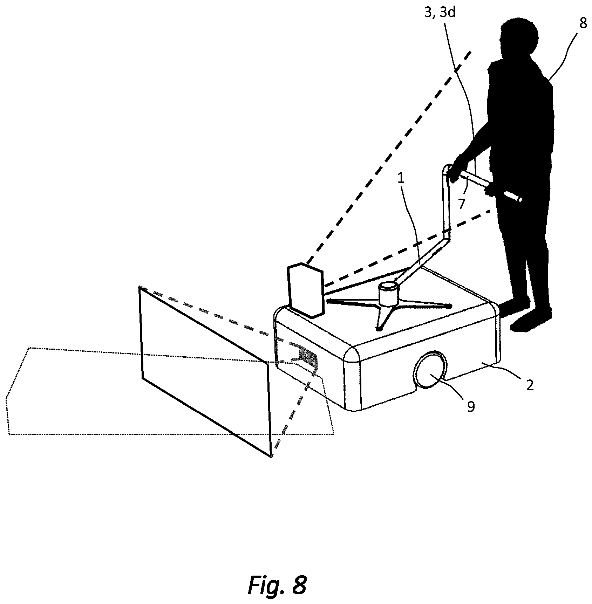

Der distale Schenkel 6.2 der abgewinkelten Kopplungsstange 6 kann ausgebildet sein, sowohl den Anschlussabschnitt 7, als auch einen Handgriffabschnitt 7a, 3d (siehe insbesondere auch Fig. 8) zu bilden.

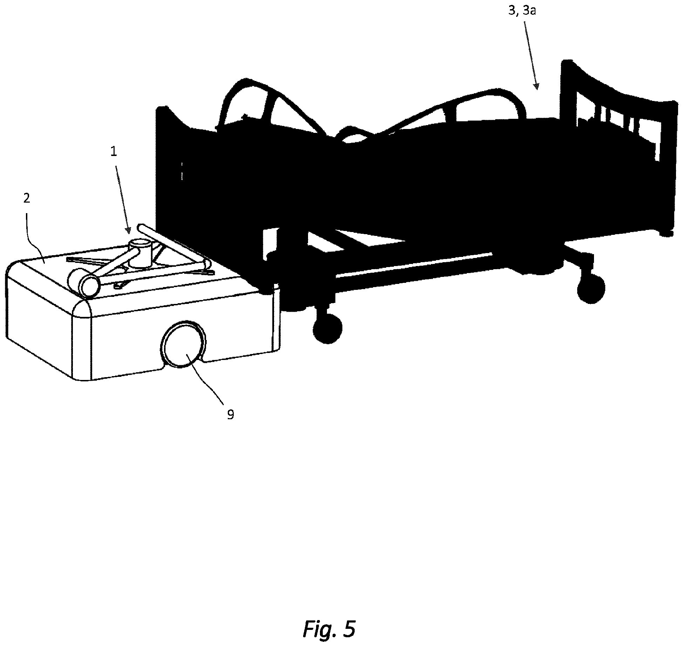

In Fig. 5 bis Fig. 9 sind verschiedene mögliche Systeme aufgezeigt, die mittels der erfindungsgemäßen Kopplungsvorrichtung 1 wahlweise individuell, je nach momentaner Anforderung, zusammengestellt werden können. Genauer gesagt handelt es sich dabei um das identische Transportsystem, jedoch in unterschiedlichen Konfigurationen, um die verschiedenen Transportmodi umsetzen zu können. Das jeweilige System zum automatischen Bewegen einer Patiententransportvorrichtung 3 mittels eines autonomen Fahrzeugs 2, weist eine Patiententransportvorrichtung 3, ein autonomes Fahrzeug 2 und eine das autonome Fahrzeug 2 an die Patiententransportvorrichtung 3 koppelnde Kopplungsvorrichtung 1, nach einer Ausführungsform oder nach mehreren Ausführungsformen, wie im Folgenden näher beschrieben auf.

Die Fig. 5 zeigt eine erste Ausführungsvariante eines Systems, aufweisend ein autonomes Fahrzeug 2, eine Kopplungsvorrichtung 1, die das autonome Fahrzeug 2 an eine Patiententransportvorrichtung 3 koppelt, wobei die Patiententransportvorrichtung 3 als ein Krankenbett 3a ausgebildet ist.

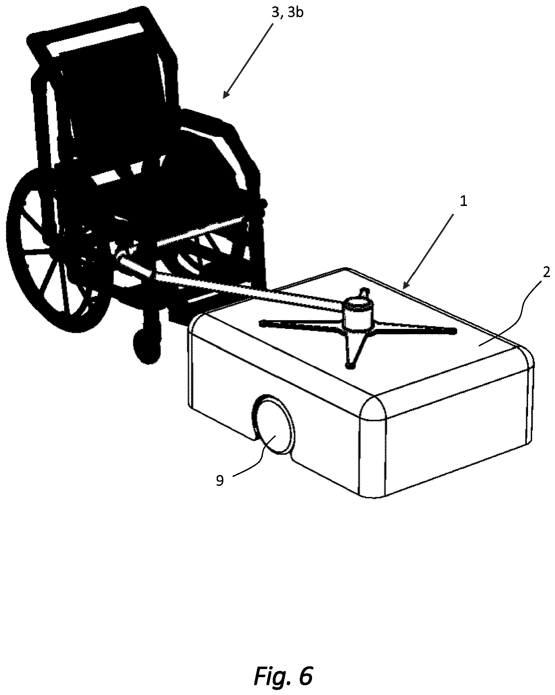

Die Fig. 6 zeigt eine zweite Ausführungsvariante eines Systems, aufweisend ein autonomes Fahrzeug 2, eine Kopplungsvorrichtung 1, die das autonome Fahrzeug 2 an eine Patiententransportvorrichtung 3 koppelt, wobei die Patiententransportvorrichtung 3 als ein Rollstuhl 3b ausgebildet ist.

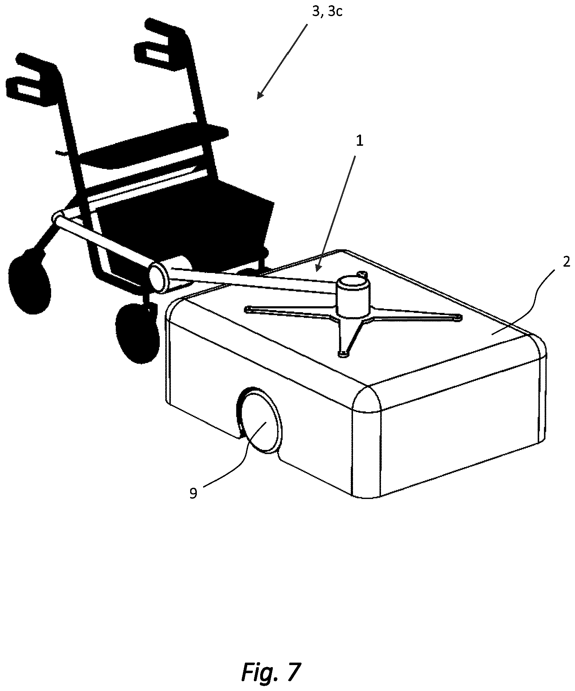

Die Fig. 7 zeigt eine dritte Ausführungsvariante eines Systems, aufweisend ein autonomes Fahrzeug 2, eine Kopplungsvorrichtung 1, die das autonome Fahrzeug 2 an eine Patiententransportvorrichtung 3 koppelt, wobei die Patiententransportvorrichtung 3 als ein Rollator 3c ausgebildet ist.

Die Fig. 8 zeigt eine vierte Ausführungsvariante eines Systems, aufweisend ein autonomes Fahrzeug 2, eine Kopplungsvorrichtung 1, die an dem autonome Fahrzeug 2 befestigt ist, wobei die Kopplungsvorrichtung 1 einen Handgriffabschnitt 3d, 7 bildet, der von einer gehenden Person 8 gegriffen werden kann.

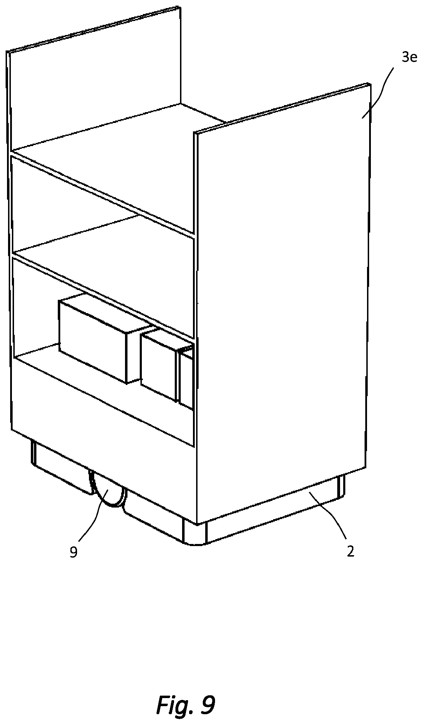

Die Fig. 9 zeigt eine fünfte Ausführungsvariante eines Systems, aufweisend ein autonomes Fahrzeug 2, eine Kopplungsvorrichtung 1, die an dem autonome Fahrzeug 2 befestigt und in eine verborgene Stellung gebracht ist, derart, dass das autonome Fahrzeug 2 ein Krankenhaus-Transportregal 3e aufnehmen und transportieren kann.

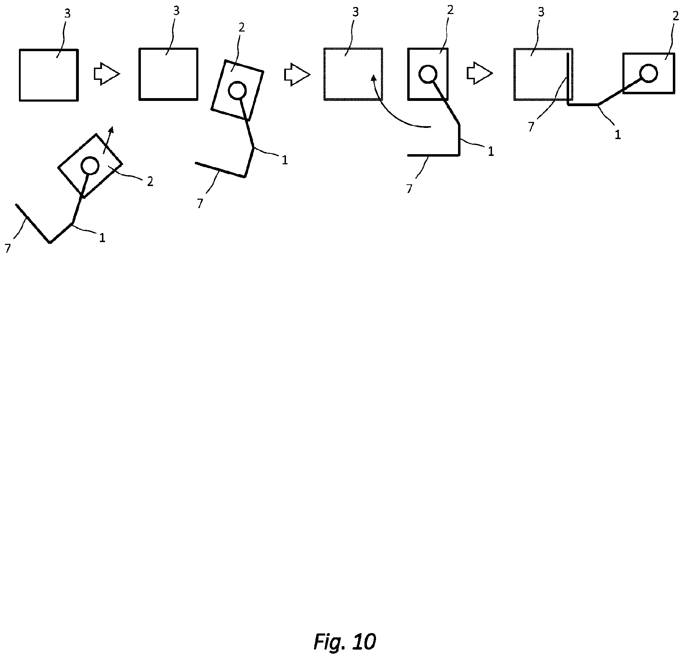

Die Fig. 10 veranschaulicht das Verfahren zum Betreiben eines Systems zum automatischen Bewegen einer Patiententransportvorrichtung 3 mittels eines autonomen Fahrzeugs 2, aufweisend eine Patiententransportvorrichtung 3, ein autonomes Fahrzeug 2 und eine das autonome Fahrzeug 2 an die Patiententransportvorrichtung 3 koppelnde Kopplungsvorrichtung 1, wie beschrieben, wobei der distale Schenkel 6.2 der Kopplungsstange 6 einen Anschlussabschnitt 7 bildet, zum Ankoppeln der Kopplungsvorrichtung 1 an eine Patiententransportvorrichtung 3, wobei der Anschlussabschnitt 7 derart ausgebildet ist, dass er mit seiner Längserstreckung einem Kreisbogen folgt, aufweisend den Schritt des automatischen Drehens des autonomen Fahrzeugs 2 durch angesteuertes Antreiben von Rädern 9 des autonomen Fahrzeugs 2 derart, dass das autonome Fahrzeug 2 sich auf einer Fahrebene um eine vertikale Drehachse dreht, und zwar um eine vertikale Drehachse welche durch den von dem Kreisbogen der Längserstreckung des Anschlussabschnitts 7 der Kopplungsvorrichtung 1 bestimmten Kreisbogenmittelpunkt in der Ankopplungsstellung der Kopplungsvorrichtung 1 verläuft.

Die Fig. 10 veranschaulicht das Verfahren zum Betreiben eines Systems zum automatischen Bewegen einer Patiententransportvorrichtung 3 mittels eines autonomen Fahrzeugs 2, aufweisend eine Patiententransportvorrichtung 3, ein autonomes Fahrzeug 2 und eine das autonome Fahrzeug 2 an die Patiententransportvorrichtung 3 koppelnde Kopplungsvorrichtung 1, wie beschrieben, aufweisend die Schritte des automatischen Drehens des autonomen Fahrzeugs 2 aus seiner Ausgangsstellung durch angesteuertes Antreiben von Rädern 9 des autonomen Fahrzeugs 2 derart, dass das autonome Fahrzeug 2 sich auf einer Fahrebene um eine vertikale Drehachse dreht, die durch das autonome Fahrzeug 2 verläuft, bis das autonome Fahrzeug 2 eine Stellung einnimmt, in der es tangential zu einem um die Patiententransportvorrichtung 3 umlaufenden geschlossenen Ringpfad fahrbar ist, anschließend automatisches Fahren des autonomen Fahrzeugs 2 entlang des Ringpfades, der die Patiententransportvorrichtung 3 geschlossen umlaufend umgibt, derart, dass eine Wendeachse, um welche sich die Patiententransportvorrichtung 3 dreht, wenn sich das autonome Fahrzeug 2 entlang des Ringpfades bewegt, durch die Patiententransportvorrichtung 3 verläuft, bis die Patiententransportvorrichtung 3 gewendet ist, und abschließendes erneutes automatisches Drehen des autonomen Fahrzeugs 2 durch angesteuertes Antreiben von Rädern 9 des autonomen Fahrzeugs 2 derart, dass das autonome Fahrzeug 2 sich auf der Fahrebene um eine vertikale Drehachse dreht, die durch das autonome Fahrzeug 2 verläuft, bis das autonome Fahrzeug 2 eine Stellung einnimmt, in der es mit seiner Hauptfahrrichtung um eine zu seiner Ausgangsstellung um 180 Grad gewendeten Stellung, oder in einer beliebigen anderen Orientierung ausgerichtet ist.

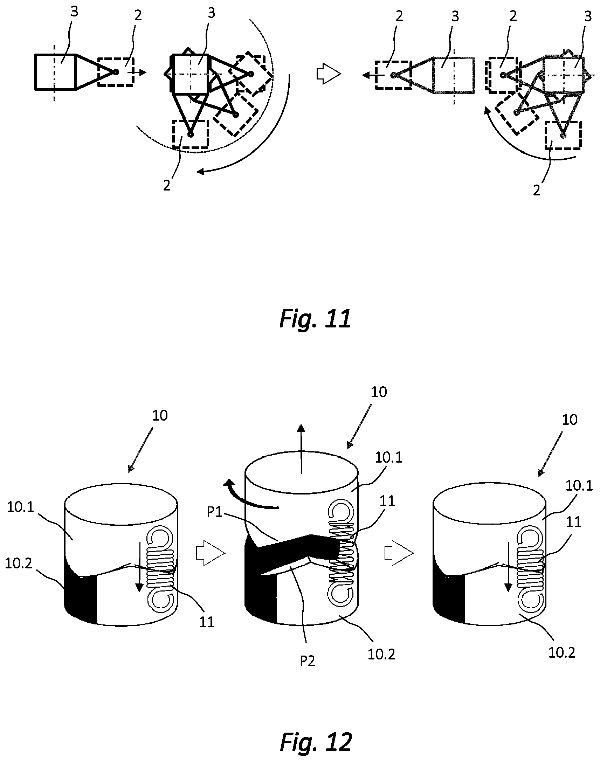

Die Fig. 12 zeigt eine Rastvorrichtung 10, die in das Schwenkgelenk S integriert sein kann, um das Schwenkgelenk S auszubilden, den proximalen Schenkel 6.1 der Kopplungsstange 6 an dem distalen Endabschnitt 5.2 des Lenkers 5 in einer vorbestimmten Anzahl von unterschiedlichen Schwenkstellungen arretierbar schwenkbar lagern zu können. Für eine arretierbare Ausbildung des Drehgelenks D und/oder des Schwenkgelenks S kann das jeweilige Gelenk die Rastvorrichtung 10 aufweisen, welche ausgebildet ist, das betreffende Gelenk in mehreren verschiedenen Gelenkwinkelstellungen, die insoweit Raststufen des Gelenks bilden, einrastend zu arretieren. Die Rastvorrichtung 10 kann dazu beispielsweise zwei klauenkupplungsartige Rastkörper 10.1 und 10.2 aufweisen, welche aufeinander zuweisende Stirnseiten aufweisen, die formergänzende Rastprofile P1, P2 aufweisen. Ein erster Rastkörper 10.1 und ein zweiter Rastkörper 10.2 der Rastvorrichtung 10 können dazu mit ihren Stirnseiten aufeinander zuweisend mittels einer Federeinrichtung 11 gegeneinander vorgespannt sein.

## Patentansprüche

1. Kopplungsvorrichtung zum Ankoppeln eines autonomen Fahrzeugs (2) an eine Patiententransportvorrichtung (3), **gekennzeichnet durch**:
- ein Anschlussglied (4), das ausgebildet ist zur Befestigung der Kopplungsvorrichtung (1) an einem autonomen Fahrzeug (2),
- einen ersten Lenker (5) mit einem proximalen Endabschnitt (5.1) und einem gegenüberliegenden distalen Endabschnitt (5.2), wobei der proximale Endabschnitt (5.1) des Lenkers (5) mittels eines Drehgelenks (D) der Kopplungsvorrichtung (1) an dem Anschlussglied (4) drehbar gelagert ist, und
- eine abgewinkelte Kopplungsstange (6) mit einem proximalen Schenkel (6.1) und einem gegenüber der Längserstreckung des proximalen Schenkels (6.1) abgewinkelt angeordneten distalen Schenkel (6.2), wobei der proximale Schenkel (6.1) der Kopplungsstange (6) mittels eines Schwenkgelenks (S) der Kopplungsvorrichtung (1) an dem distalen Endabschnitt (5.2) des Lenkers (5) schwenkbar gelagert ist und der distale Schenkel (6.2) der Kopplungsstange (6) einen Anschlussabschnitt (7) bildet, zum Ankoppeln der Kopplungsvorrichtung (1) an eine Patiententransportvorrichtung (3).

2. Kopplungsvorrichtung nach Anspruch 1, **dadurch gekennzeichnet, dass** das Drehgelenk (D), mittels dem der proximale Endabschnitt (5.1) des Lenkers (5) an dem Anschlussglied (4) der Kopplungsvorrichtung (1) drehbar gelagert ist, eine Drehachse (A1) aufweist, welche in einer an das autonome Fahrzeug (2) angekoppelten Anordnung der Kopplungsvorrichtung (1) vertikal ausgerichtet ist, und das Schwenkgelenk (S), mittels dem der proximale Schenkel (6.1) der Kopplungsstange (6) an dem distalen Endabschnitt (5.2) des Lenkers (5) schwenkbar gelagert ist, eine Schwenkachse (A2) aufweist, welche in einer an das autonome Fahrzeug (2) angekoppelten Anordnung der Kopplungsvorrichtung (1) zumindest im Wesentlichen horizontal ausgerichtet ist.

3. Kopplungsvorrichtung nach Anspruch 1 oder 2, **dadurch gekennzeichnet, dass** das Drehgelenk (D) und/oder das Schwenkgelenk (S) arretierbar, in einer nicht-arretierten Weise frei drehbar, aus einer Drehbewegung bremsbar und/oder automatisch antreibbar ausgebildet ist.

4. Kopplungsvorrichtung nach einem der Ansprüche 1 bis 3, **dadurch gekennzeichnet, dass** das Drehgelenk (D) und/oder das Schwenkgelenk (S) automatisch arretierbar und/oder manuell arretierbar ausgebildet ist.

5. Kopplungsvorrichtung nach einem der Ansprüche 1 bis 4, **dadurch gekennzeichnet, dass** das Drehgelenk (D) ausgebildet ist, den proximalen Endabschnitt (5.1) des Lenkers (5) an dem Anschlussglied (4) der Kopplungsvorrichtung (1) über wenigstens 360 Grad drehbar zu lagern.

6. Kopplungsvorrichtung nach einem der Ansprüche 1 bis 5, **dadurch gekennzeichnet, dass** das Schwenkgelenk (S) ausgebildet ist, den proximalen Schenkel (6.1) der Kopplungsstange (6) an dem distalen Endabschnitt (5.2) des Lenkers (5) in einer vorbestimmten Anzahl von unterschiedlichen Schwenkstellungen arretierbar schwenkbar zu lagern.

7. Kopplungsvorrichtung nach einem der Ansprüche 1 bis 6, **dadurch gekennzeichnet, dass** der distale Schenkel (6.2) der abgewinkelten Kopplungsstange (6) ausgebildet ist, sowohl einen Anschlussabschnitt (7), als auch einen Handgriffabschnitt (7a) zu bilden.

8. Kopplungsvorrichtung nach einem der Ansprüche 1 bis 7, **dadurch gekennzeichnet, dass** das Drehgelenk (D) eine erste Überlastsicherung aufweist, die ausgebildet ist, das arretierte, das gebremste oder das angetriebene Drehgelenk (D) drehmomentfrei zu schalten, wenn das übertragene Drehmoment ein vorbestimmtes Maximalmoment überschreitet und/oder das Schwenkgelenk (S) eine zweite Überlastsicherung aufweist, die ausgebildet ist, das arretierte, das gebremste oder das angetriebene Schwenkgelenk (S) drehmomentfrei zu schalten, wenn das übertragene Drehmoment ein vorbestimmtes Maximalmoment überschreitet.

9. System zum automatischen Bewegen einer Patiententransportvorrichtung (3) mittels eines autonomen Fahrzeugs (2), aufweisend eine Patiententransportvorrichtung (3), ein autonomes Fahrzeug (2) und eine das autonome Fahrzeug (2) an die Patiententransportvorrichtung (3) koppelnde Kopplungsvorrichtung (1) nach einem der Ansprüche 1 bis 8.

10. Verfahren zum Betreiben eines Systems nach Anspruch 9, **gekennzeichnet durch** die Schritte:
- automatisches Drehen des autonomen Fahrzeugs (2) aus seiner Ausgangsstellung durch angesteuertes Antreiben von Rädern (9) des autonomen Fahrzeugs (2) derart, dass das autonome Fahrzeug (2) sich auf einer Fahrebene um eine vertikale Drehachse dreht, die durch das autonome Fahrzeug (2) verläuft, bis das autonome Fahrzeug (2) eine Stellung einnimmt, in der es tangential zu einem um die Patiententransportvorrichtung (3) umlaufenden geschlossenen Ringpfad fahrbar ist,
- automatisches Fahren des autonomen Fahrzeugs (2) entlang des Ringpfades, der die Patiententransportvorrichtung (3) geschlossen umlaufend umgibt, derart, dass eine Wendeachse oder Drehachse, um welche sich die Patiententransportvorrichtung (3) dreht, wenn sich das autonome Fahrzeug (2) entlang des Ringpfades bewegt, durch die Patiententransportvorrichtung (3) verläuft, bis die Patiententransportvorrichtung (3) gewendet oder gedreht ist,
- erneutes automatisches Drehen des autonomen Fahrzeugs (2) durch angesteuertes Antreiben von Rädern (9) des autonomen Fahrzeugs (2) derart, dass das autonome Fahrzeug (2) sich auf der Fahrebene um eine vertikale Drehachse dreht, die durch das autonome Fahrzeug (2) verläuft, bis das autonome Fahrzeug (2) eine Stellung einnimmt, in der es mit seiner Hauptfahrrichtung um eine zu seiner Ausgangsstellung um einen Winkel gedrehten oder um 180 Grad gewendeten Stellung ausgerichtet ist.

11. Verfahren zum Betreiben eines Systems nach Anspruch 9, **dadurch gekennzeichnet, dass** der distale Schenkel (6.2) der Kopplungsstange (6) einen Anschlussabschnitt (7) bildet, zum Ankoppeln der Kopplungsvorrichtung (1) an eine Patiententransportvorrichtung (3), wobei der Anschlussabschnitt (7) derart ausgebildet ist, dass er mit seiner Längserstreckung einem Pfad, insbesondere Bogen oder einem Kreisbogen folgt, aufweisend den Schritt:
- automatisches Drehen des autonomen Fahrzeugs (2) durch angesteuertes Antreiben von Rädern (9) des autonomen Fahrzeugs (2) derart, dass das autonome Fahrzeug (2) sich auf einer Fahrebene um eine vertikale Drehachse dreht, und zwar um eine vertikale Drehachse welche durch den von dem einem Pfad, insbesondere Bogen oder Kreisbogen der Längserstreckung des Anschlussabschnitts (7) der Kopplungsvorrichtung (1) bestimmten Bogenmittelpunkt in der Ankopplungsstellung der Kopplungsvorrichtung (1) verläuft.

## Claims

1. Coupling device for coupling an autonomous vehicle (2) to a patient transport device (3), comprising:
- a connecting member (4) which is designed to attach the coupling device (1) to an autonomous vehicle (2),
- a first link (5) with a proximal end portion (5.1) and an opposite distal end portion (5.2), wherein the proximal end portion (5.1) of the link (5) is rotatably mounted on the connecting member (4) by means of a rotary joint (D) of the coupling device (1), and
- an angled coupling rod (6) with a proximal leg (6.1) and a distal leg (6.2) arranged at an angle with respect to the longitudinal extension of the proximal leg (6.1), wherein the proximal leg (6.1) of the coupling rod (6) is pivotally mounted on the distal end section (5.2) of the handlebar (5) by means of a pivot joint (S) of the coupling device (1) and the distal leg (6.2) of the coupling rod (6) forms a connection section (7) for coupling the coupling device (1) to a patient transport device (3) .

2. Coupling device according to claim 1, **characterized in that** the swivel joint (D), by means of which the proximal end section (5.1) of the handlebar (5) is rotatably mounted on the connecting member (4) of the coupling device (1), has a rotation axis (A1) which is aligned vertically in an arrangement of the coupling device (1) coupled to the autonomous vehicle (2), and the swivel joint (S), by means of which the proximal leg (6.1) of the coupling rod (6) is pivotally mounted on the distal end section (5.2) of the handlebar (5), has a swivel axis (A2) which is aligned at least substantially horizontally in an arrangement of the coupling device (1) coupled to the autonomous vehicle (2).

3. Coupling device according to claim 1 or 2, **characterized in that** the rotary joint (D) and/or the swivel joint (S) is designed to be lockable, freely rotatable in a non-locked manner, brakeable from a rotary movement and/or automatically drivable.

4. Coupling device according to one of claims 1 to 3, **characterized in that** the rotary joint (D) and/or the swivel joint (S) is designed to be automatically lockable and/or manually lockable.

5. Coupling device according to one of claims 1 to 4, **characterized in that** the rotary joint (D) is designed to mount the proximal end section (5.1) of the handlebar (5) on the connecting member (4) of the coupling device (1) so as to be rotatable over at least 360 degrees..

6. Coupling device according to one of claims 1 to 5, **characterized in that** the pivot joint (S) is designed to pivotally mount the proximal leg (6.1) of the coupling rod (6) on the distal end section (5.2) of the handlebar (5) in a predetermined number of different pivot positions.

7. Coupling device according to one of claims 1 to 6, **characterized in that** the distal leg (6.2) of the angled coupling rod (6) is designed to form both a connection section (7) and a handle section (7a).

8. Coupling device according to one of claims 1 to 7, **characterized in that** the swivel joint (D) has a first overload protection device which is designed to switch the locked, the braked or the driven swivel joint (D) torque-free when the transmitted torque exceeds a predetermined maximum torque and/or the swivel joint (S) has a second overload protection device which is designed to switch the locked, the braked or the driven swivel joint (S) torque-free when the transmitted torque exceeds a predetermined maximum torque.

9. System for automatically moving a patient transport device (3) by means of an autonomous vehicle (2), comprising a patient transport device (3), an autonomous vehicle (2) and a coupling device (1) coupling the autonomous vehicle (2) to the patient transport device (3) according to one of claims 1 to 8.

10. A method for operating a system according to claim 9, comprising the steps:
- automatically turning the autonomous vehicle (2) from its starting position by controlled driving of wheels (9) of the autonomous vehicle (2) such that the autonomous vehicle (2) rotates on a driving plane about a vertical axis of rotation that runs through the autonomous vehicle (2) until the autonomous vehicle (2) assumes a position in which it can be driven tangentially to a closed ring path encircling the patient transport device (3),
- automatically driving the autonomous vehicle (2) along the ring path that surrounds the patient transport device (3) in a closed, circular manner such that a turning axis or axis of rotation around which the patient transport device (3) rotates when the autonomous vehicle (2) moves along the ring path runs through the patient transport device (3) until the patient transport device (3) is turned or rotated,
- automatically rotating the autonomous vehicle (2) again by controlled driving of wheels (9) of the autonomous vehicle (2) such that the autonomous vehicle (2) rotates on the driving plane about a vertical axis of rotation that runs through the autonomous vehicle (2) until the autonomous vehicle (2) assumes a position in which it is aligned with its main direction of travel in a position rotated by an angle to its starting position or turned by 180 degrees.

11. Method for operating a system according to claim 9, **characterized in that** the distal leg (6.2) of the coupling rod (6) forms a connection section (7) for coupling the coupling device (1) to a patient transport device (3), wherein the connection section (7) is designed such that it follows a path, in particular an arc or a circular arc, with its longitudinal extension, comprising the step:
- automatic rotation of the autonomous vehicle (2) by controlled driving of wheels (9) of the autonomous vehicle (2) such that the autonomous vehicle (2) rotates on a driving plane about a vertical axis of rotation, namely about a vertical axis of rotation which runs through the arc center point determined by a path, in particular an arc or circular arc of the longitudinal extension of the connecting section (7) of the coupling device (1) in the coupling position of the coupling device (1).

## Revendications

1. Dispositif d'attelage pour l'attelage d'un véhicule autonome (2) à un dispositif de transport de patients (3), comprenant :
- un élément de liaison (4) qui est conçu pour fixer le dispositif d'attelage (1) à un véhicule autonome (2),
- un premier maillon (5) avec une partie d'extrémité proximale (5.1) et une partie d'extrémité distale opposée (5.2), dans lequel la partie d'extrémité proximale (5.1) du lien (5) est montée en rotation sur l'élément de liaison (4) au moyen d'un joint tournant (D) du dispositif d'accouplement (1), et
- une tige d'accouplement coudée (6) avec une jambe proximale (6.1) et une jambe distale (6.2) disposées à un angle par rapport à l'extension longitudinale de la jambe proximale (6.1), dans laquelle la jambe proximale (6.1) de la tige d'accouplement (6) est montée de manière pivotante sur la section d'extrémité distale (5.2) du guidon (5) au moyen d'une articulation pivotante (S) du dispositif d'attelage (1) et de la jambe distale (6.2) de la tige d'accouplement (6) forme une section de connexion (7) pour coupler le dispositif d'accouplement (1) à un dispositif de transport de patients (3).

2. Dispositif d'attelage selon la revendication 1, **caractérisé en ce que** l'articulation pivotante (D), au moyen de laquelle la section d'extrémité proximale (5.1) du guidon (5) est montée en rotation sur l'élément de liaison (4) du dispositif d'attelage (1), a un axe de rotation (A1) qui est aligné verticalement dans un agencement du dispositif d'attelage (1) couplé au véhicule autonome (2), et l'articulation pivotante (S), au moyen de laquelle la jambe proximale (6.1) de la tige d'accouplement (6) est montée de manière pivotante sur la section d'extrémité distale (5.2) du guidon (5), a un axe de pivotement (A2) qui est aligné au moins sensiblement horizontalement dans un agencement du dispositif d'attelage (1) couplé au véhicule autonome (2).

3. Dispositif d'attelage selon la revendication 1 ou 2, **caractérisé en ce que** l'articulation tournante (D) et/ou l'articulation pivotante (S) sont conçues pour être verrouillables, librement orientables de manière non verrouillée, freinables par un mouvement rotatif et/ou entraînables automatiquement.

4. Dispositif d'attelage selon l'une des revendications 1 à 3, **caractérisé en ce que** le joint tournant (D) et/ou le joint pivotant (S) est conçu pour être verrouillable automatiquement et/ou verrouillable manuellement.

5. Dispositif d'attelage selon l'une des revendications 1 à 4, **caractérisé en ce que** le joint tournant (D) est conçu pour monter la section d'extrémité proximale (5.1) du guidon (5) sur l'élément de liaison (4) du dispositif d'attelage (1) de manière à pouvoir pivoter sur au moins 360 degrés.

6. Dispositif d'attelage selon l'une des revendications 1 à 5, **caractérisé en ce que** l'articulation de pivot (S) est conçue pour monter de manière pivotante la jambe proximale (6.1) de la tige d'accouplement (6) sur la section d'extrémité distale (5.2) du guidon (5) dans un nombre prédéterminé de positions de pivot différentes.

7. Dispositif d'attelage selon l'une des revendications 1 à 6, **caractérisé en ce que** la patte distale (6.2) de la tige d'accouplement coudée (6) est conçue pour former à la fois une section de liaison (7) et une section de poignée (7a).

8. Dispositif d'attelage selon l'une des revendications 1 à 7, **caractérisé en ce que** l'articulation tournante (D) est dotée d'un premier dispositif de protection contre les surcharges qui est conçu pour commuter l'articulation pivotante (D) verrouillée, freinée ou entraînée sans couple lorsque le couple transmis dépasse un couple maximal prédéterminé et/ou que l'articulation pivotante (S) est dotée d'un second dispositif de protection contre les surcharges qui est conçu pour commuter l'articulation pivotante verrouillée, l'articulation pivotante freinée ou entraînée (S) sans couple lorsque le couple transmis dépasse un couple maximal prédéterminé.

9. Système de déplacement automatique d'un dispositif de transport de patients (3) au moyen d'un véhicule autonome (2), comprenant un dispositif de transport de patients (3), un véhicule autonome (2) et un dispositif de couplage (1) couplant le véhicule autonome (2) au dispositif de transport de patients (3) selon l'une des revendications 1 à 8.

10. Procédé de fonctionnement d'un système selon la revendication 9, comprenant les étapes suivantes :
- faire tourner automatiquement le véhicule autonome (2) à partir de sa position de départ par entraînement contrôlé des roues (9) du véhicule autonome (2) de sorte que le véhicule autonome (2) tourne sur un plan de conduite autour d'un axe de rotation vertical qui traverse le véhicule autonome (2) jusqu'à ce que le véhicule autonome (2) prenne une position dans laquelle il peut être conduit tangentiellement à une trajectoire annulaire fermée encerclant le dispositif de transport de patient (3),
- conduire automatiquement le véhicule autonome (2) le long de la trajectoire de l'anneau qui entoure le dispositif de transport de patients (3) de manière fermée et circulaire, de sorte qu'un axe de rotation ou un axe de rotation autour duquel le dispositif de transport de patients (3) tourne lorsque le véhicule autonome (2) se déplace le long de la trajectoire de l'anneau traverse le dispositif de transport de patients (3) jusqu'à ce que le dispositif de transport de patients (3) soit tourné ou tourné,
- rotation automatique du véhicule autonome (2) à nouveau par entraînement contrôlé des roues (9) du véhicule autonome (2) de sorte que le véhicule autonome (2) tourne sur le plan de conduite autour d'un axe vertical de rotation qui traverse le véhicule autonome (2) jusqu'à ce que le véhicule autonome (2) prenne une position dans laquelle il est aligné avec sa direction de déplacement principale dans une position tournée d'un angle par rapport à sa position de départ ou tournée par 180 degrés.

11. Procédé de fonctionnement d'un système selon la revendication 9, **caractérisé en ce que** la jambe distale (6.2) de la tige d'accouplement (6) forme une section de connexion (7) pour coupler le dispositif d'accouplement (1) à un dispositif de transport de patient (3), dans lequel la section de connexion (7) est conçue de telle sorte qu'elle suit une trajectoire, en particulier un arc ou un arc circulaire, avec son prolongement longitudinal, comprenant la marche :
- rotation automatique du véhicule autonome (2) par entraînement contrôlé des roues (9) du véhicule autonome (2) de telle sorte que le véhicule autonome (2) tourne sur un plan de conduite autour d'un axe de rotation vertical, à savoir autour d'un axe vertical de rotation qui passe par le centre de l'arc déterminé par une trajectoire, en particulier un arc ou un arc circulaire du prolongement longitudinal de la section de liaison (7) du dispositif d'attelage (1) en la position d'accouplement du dispositif d'attelage (1).
